# EUROPÄISCHE PATENTSCHRIFT

(11) **EP 2 050 911 B1**
(45) Veröffentlichungstag und Bekanntmachung des Hinweises auf die Patenterteilung: **24.06.2015**
(21) Anmeldenummer: 08162964.4
(22) Anmeldetag: 26.08.2008
(51) Int. Cl.: E05F 15/611, E05D 15/46, E05D 3/16, F16D 7/10, F16D 43/208

(54) **Angetriebener Beschlag**
Driven fitting
Ferrure entraînée

(30) Priorität: 16.10.2007 DE 202007014560 U
(43) Veröffentlichungstag der Anmeldung: 22.04.2009
(73) Patentinhaber: Hettich-Heinze GmbH & Co. KG, 32139 Spenge (DE)
(72) Erfinder: Montecchio, Andreas, 33615, Bielefeld (DE); Ihnofeld, Werner, 33813, Oerlinghausen (DE)
(74) Vertreter: Dantz, Jan Henning

(56) Entgegenhaltungen:
- EP-A1- 0 725 201
- EP-A2- 1 788 179
- DE-A1- 3 141 534
- US-A- 2 912 237

## Beschreibung

Die vorliegende Erfindung betrifft einen angetriebenen Beschlag, insbesondere einen Klappenbeschlag für Möbel, mit mindestens einem Stellarm zum Öffnen und Schließen eines bewegbaren Möbelteils, und einem Antrieb zum Bewegen des Stellarmes, wobei zwischen Stellarm und Antrieb eine Kupplung angeordnet ist, die eine Bewegung des Stellarmes auch unabhängig von dem Antrieb ermöglicht.

Die WO 2006/099645 offenbart einen Klappenbeschlag für ein Möbel, bei dem eine Klappe über einen verschwenkbaren Stellarm bewegbar ist. Der Stellarm ist dabei durch eine Feder vorgespannt und durch einen elektrischen Antrieb bewegbar. Zwischen dem Stellarm und dem Antrieb ist eine Kupplungsvorrichtung wirksam, die zumindest in einer Drehrichtung über einen begrenzten Drehwinkelbereich einen Freilauf zum freien Bewegen des Stellarmes ermöglicht. Dadurch kann die Klappe über einen vorbestimmten Drehwinkelbereich auch von Hand betätigt werden. Nachteilig bei diesem Klappenbeschlag ist, dass der Drehwinkelbereich abhängig vom Einsatzfall variieren sollte und gerade bei einem Klappenbeschlag unterschiedliche Kräfte auf den Stellarm wirken. Dadurch kann das zum Entkuppeln der Kupplungsvorrichtung erforderliche Auslösemoment abhängig von der Position des Stellarmes sein, wobei eine optimierte Anpassung für den Benutzer nicht möglich ist.

Die US 2,912,237 offenbart einen angetriebenen Beschlag gemäß dem Oberbegriff des Anspruchs 1, bei dem über einen Motor eine Möbeltür verschwenkbar ist. Der Motor treibt dabei ein Getriebe mit einem Riemen an.

Es ist daher Aufgabe der vorliegenden Erfindung einen angetriebenen Beschlag zu schaffen, der auch manuell betätigbar ist und in der Handhabung verbessert ist.

Diese Aufgabe wird mit einem angetriebenen Beschlag mit den Merkmalen des Anspruches 1 gelöst.

Erfindungsgemäß ist die Kraft zum Auskuppeln der Kupplung zwischen dem Stellarm und dem Antrieb abhängig von der Position des Stellarmes verstellbar, so dass das Auskuppeln der Kupplung an die mögliche manuelle Betätigung durch den Benutzer angepasst ist. Dabei ist es möglich, die Kraft zum Auskuppeln der Kupplung an die Anforderungen des sich bewegenden Stellarmes anzupassen, wobei der Auslösemechanismus für das Auskuppeln der Kupplung von anderen Einflüssen, wie einer Gewichtskraft eines verschwenkten Möbelteils entkoppelt werden kann. Dies lässt eine optimierte Anpassung des Auslösemechanismusses an die jeweilige Position des Stellarmes zu. Die Kraft zum Auskuppeln der Kupplung kann dabei über den gesamten Verstellweg konstant eingestellt bleiben, oder man kann z.B. bei einem geschlossenen Möbelteil die Kraft zum Auskuppeln der Kupplung sehr gering einstellen, da eine versehentliche Betätigung unwahrscheinlich ist.

Die Kupplung ist als Rastkupplung ausgebildet und die Rastmittel lassen sich abhängig von der Position des Stellarmes mit unterschiedlicher Kraft außer Eingriff bringen. Dabei können die Rastmittel über eine Feder in die eingerastete Position vorgespannt sein, wobei die Federkraft zum Vorspannen der Rastmittel veränderbar ist. Dies ermöglicht eine optimale Einstellung des Auslösemechanismusses der Kupplung, der abhängig von dem jeweiligen Einsatzzweck ausgestaltet werden kann.

Ein mechanisch zuverlässiger Auslösemechanismus weißt eine Steuerkurve auf, die mit dem Stellarm gekoppelt ist, um die Kraft zum Auslösen der Rastmittel zu verändern. Die Steuerkurve kann dabei abhängig von der Position des Stellarmes die Vorspannung der Rastmittel ändern.

Vorzugsweise weist die Kupplung ein Antriebsrad und ein Abtriebsrad auf, zwischen den ein oder mehrere über Federn vorgespannte Rastmittel angeordnet sind, was auch eine kompakte Bauweise ergibt. Dabei kann die Steuerkurve ortsfest angeordnet sein, wobei das Abtriebsrad und/oder das Antriebsrad relativ zu der Steuerkurve bewegbar ist. Nach dem Auskuppeln kann dann zu einem späteren Zeitpunkt der Antrieb eingeschaltet werden und ermöglicht so ein Einrasten der Rastmittel für eine nachfolgende motorische Betätigung.

Vorzugsweise ist die Steuerkurve nockenförmig ausgebildet und kann aufgrund der unterschiedlichen Radien die Federn axial bewegen.

Die Rastmittel können vorzugsweise bolzenförmig ausgebildet sein, die jeweils teilweise in eine Aussparung einfügbar sind. Auch andere Formen von Rastmitteln mit einer ebenen Gleitfläche können eingesetzt werden.

In einer weiteren Ausgestaltung ist an der Aussparung benachbart zu dem Rastmittel ein gerundeter Übergang für ein sanfteres Ausrasten der Kupplung angeordnet. Dadurch wird beim Auskuppeln des Rastmittels eine gleitende Bewegung ermöglicht und eine starke Abnutzung, wie sie bei kantenförmigen Übergängen auftritt, vermieden.

Die Erfindung wird nachfolgend anhand mehrerer Ausführungsbeispiele mit Bezug auf die beigefügten Zeichnungen näher erläutert. Es zeigen:

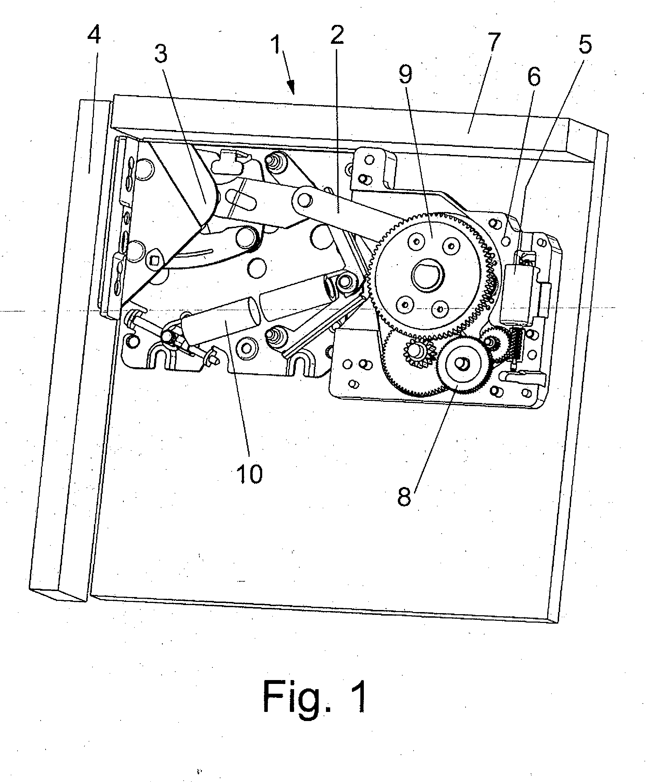

- Figur 1: eine perspektivische Ansicht eines erfindungsgemäßen Beschlages;

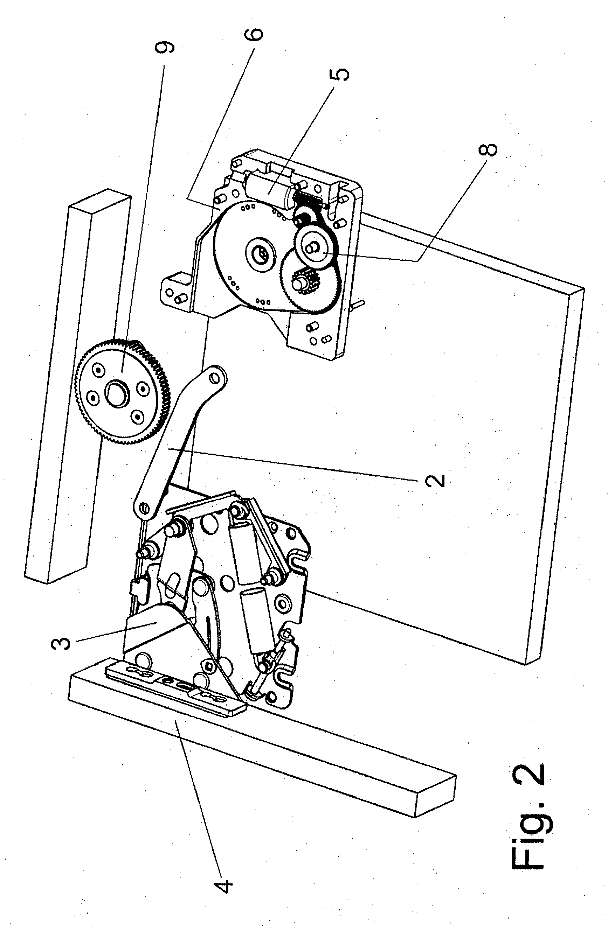

- Figur 2: eine Explosionsdarstellung des Beschlages der Figur 1;
- Figur 3: eine Explosionsdarstellung der Kupplung des Beschlages der Figur 1;
- Figur 4: eine Unteransicht der Kupplung der Figur 3 ohne Deckel;
- Figuren 5 bis 7: mehrere Ansichten der erfindungsgemäßen Kupplung des Beschlages;

- Figuren 8A bis 8C: unterschiedliche Ausführungsformen einer Steuerkurve des Beschlages;
- Figuren 9A + 9B: unterschiedliche Ausführungsformen eines Antriebsrades für den Beschlag der Figur 1;
- Figur 10: eine modifizierte Ausführungsform einer Kupplung des Beschlages, und
- Figuren 11A + 11B: eine weitere Ausführungsform einer Kupplung des Beschlages.

Ein Beschlag 1, insbesondere ein Klappenbeschlag umfasst einen Stellarm 2, der über eine Hebelmechanik 3 ein bewegbares Möbelteil, wie eine Klappe 4 verschwenken kann. Der Stellarm 2 ist über einen Antrieb 5, beispielsweise einen Elektromotor bewegbar. Der Antrieb 5 ist an einer Montageplatte 6 festgelegt, die an einem Möbelkorpus 7 montiert ist. Der Antrieb 5 treibt zunächst ein aus mehreren Zahnrädern gebildetes Getriebe 8 an, das über eine Kupplung 9 mit dem Stellarm 2 verbunden ist. Ferner ist eine Feder 10 vorgesehen, die die Klappe 4 in die geöffnete Position vorspannen kann, damit ein Teil der Gewichtskräfte der Klappe 4 in einer Offenstellung kompensiert werden.

Die Kupplung 9 ermöglicht eine Entkopplung einer Bewegung des Stellarmes 2 von dem Antrieb 5. Dadurch ist es möglich, die Klappe 4 sowohl motorisch als auch manuell zu bewegen. Denn eine manuelle Betätigung ist z.B. dann erforderlich, wenn der Antrieb 5 in Folge von Stromausfall ausfällt, ein Widerstand im Schwenkbereich der Klappe 4 vorhanden ist oder der Benutzer die Klappe 4 gegenüber dem Antrieb 5 schneller öffnen möchte.

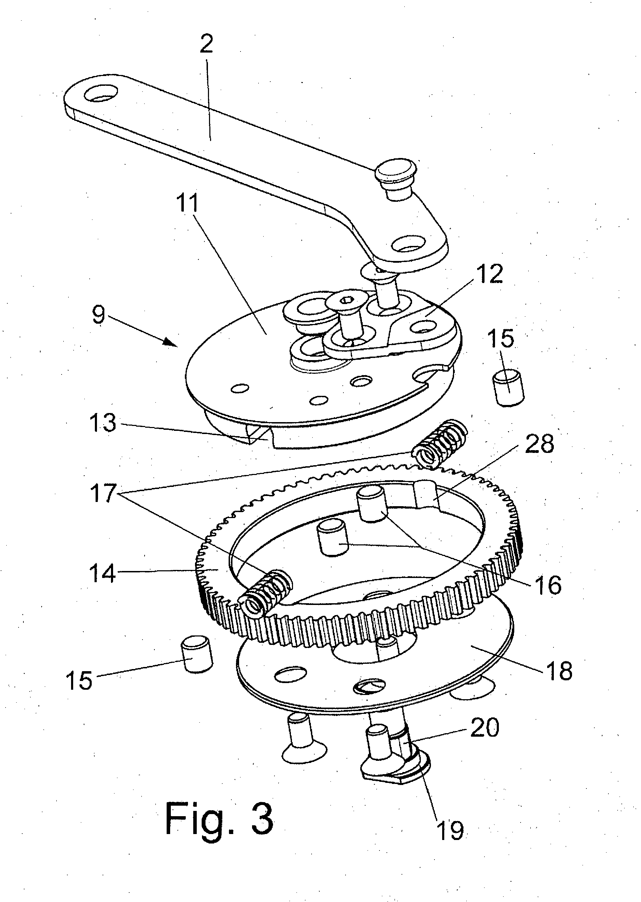

In Figur 3 ist die Kupplung 9 im Detail dargestellt. Die Kupplung 9 umfasst ein Abtriebsrad 11, an dem eine Verbindungsplatte 12 festgelegt ist, an der der Stellarm 2 drehbar angelenkt ist. Der Stellarm 2 ist dabei beabstandet von einer Drehachse des Abtriebrades 11 angeordnet.

In dem Abtriebsrad 11 ist eine Aufnahme 13 für einen Auslösemechanismus der Kupplung 9 vorgesehen. Der Auslösemechanismus ermöglicht eine Entkopplung eines Antriebsrades 14, das über Rastmittel 15 mit dem Abtriebsrad 11 gekoppelt ist. Die als Formstücke ausgebildeten Rastmittel 15 sind dabei über Federn 17 gegen eine Aussparung 28 an dem inneren Umfang des Antriebsrades 14 gedrückt gehalten. Am zur Achse 19 gerichteten Ende sind die Federn 17 über jeweils ein Druckstück 16 lagefixiert. Die Rastmittel 15 und Druckstücke 16 sowie die Feder 17 sind in der Aufnahme 13 an dem Abtriebsrad 11 geführt. Die Druckstücke 16 können bei entsprechender Gestaltung der Feder 17 auch weggelassen werden. Auf der zum Abtriebsrad 11 gegenüberliegenden Seite ist ein Deckel 18 vorgesehen, der mehrere Öffnungen aufweist und durch den eine Achse 19 geführt ist, an der eine Steuerkurve 20 montiert ist bzw. die integral mit der Achse 19 ausgebildet ist. Dabei ist die Achse 19 an der Montageplatte 6 festgelegt ist.

Weitere Lagerstellen der beidseitigen Lagerungen der Getriebezahnräder und auch der Achse 19 können in der nicht dargestellten Getriebeabdeckung angeordnet sein.

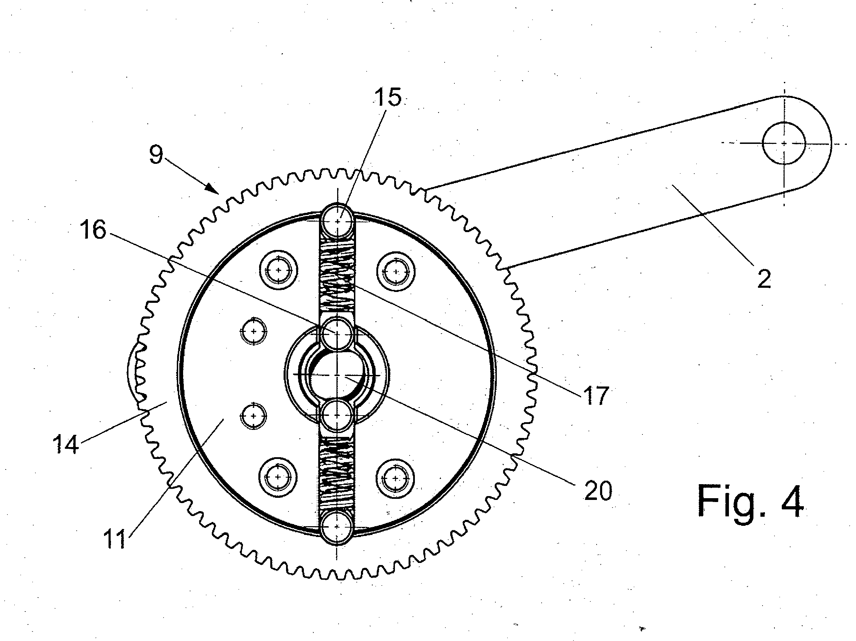

In Figur 4 ist die Kupplung 9 in der eingerasteten Position dargestellt. Bei Drehen des Antriebsrades 14 wird über die Kopplung mit den bolzenförmigen Rastmitteln 15 auch das Abtriebsrad 11 und damit der Stellarm 2 bewegt. Sollte das bewegbare Möbelteil 4 manuell betätigt werden, können die Rastmittel 15 außer Eingriff mit dem Antriebsrad 14 gebracht werden, so dass die Rastmittel 15 am inneren Umfang des Antriebsrades 14 laufen. Die Kraft zum Auslösen der Kupplung 9 entspricht dabei derjenigen Kraft, die zum außer Eingriff bringen der beiden Rastmittel 15 aus den entsprechenden Aussparungen 28 notwendig ist. Diese Kraft ist abhängig von der Vorspannung der beiden Federn 17, die auf die Rastmittel 15 wirken. Dabei ist die Federkraft über eine Steuerscheibe 20 veränderbar, an der die Drückstücke 16 auf der inneren Seite der Federn 17 anliegen. Abhängig von der Position des Stellarmes 2 werden die beiden Federn 17 stärker oder schwächer zusammengedrückt, so dass zum Herausbewegen der als Formstücke ausgebildeten Rastmittel 15 aus den Aussparungen 28 unterschiedlich viel Kraft aufgewendet werden muss, abhängig von der Position des Stellarmes 2.

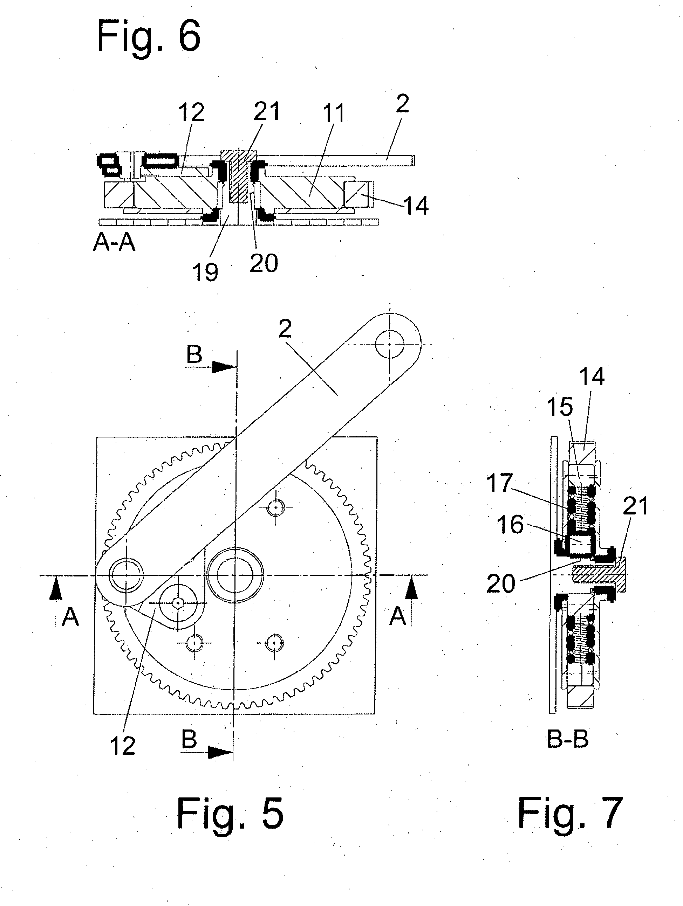

In den Figuren 5 bis 7 ist die Kupplung 9 in der zusammengebauten Position gezeigt. Das Antriebsrad 14 und das Abtriebsrad 11 sind benachbart zueinander angeordnet, so dass sich ein kompakter Aufbau ergibt.

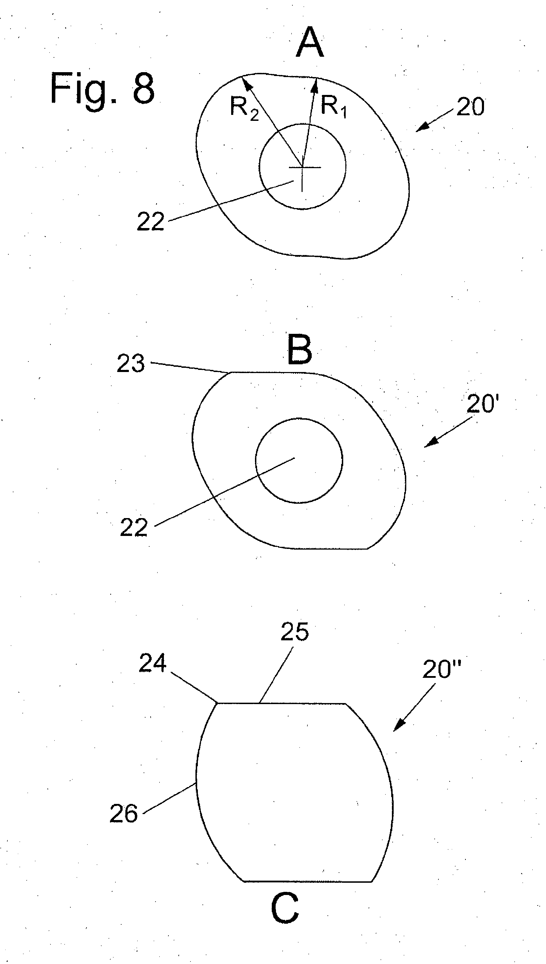

In Figur 8A ist die Steuerscheibe 20 im Detail dargestellt. Die Steuerscheibe ist um eine mittige Öffnung 22 an der Achse 19 festgelegt, wobei die nockenförmige Steuerkurve 20 Bereiche mit unterschiedlichen Radien R1 und R2 aufweist. Wenn ein Bereich mit einem größeren Radius R2 in Eingriff mit den radial innen liegenden Drückstücken 16 gelangt, werden die Federn 17 stärker zusammengedrückt und die Kraft zum Auslösen der Kupplung 9 ist größer als in Bereichen mit einem kleineren Radius R1. Die Steuerscheibe 20 kann dabei über einen bestimmten Winkelbereich genutzt werden, aber auch ein umlaufender Betrieb über eine Umdrehung des Abtriebsrades 11 hinaus ist möglich.

In Figur 8B ist eine modifizierte Ausführungsform einer Steuerkurve 20' dargestellt, bei der in einem Bereich eine Ecke 23 ausgebildet ist. Dies ermöglicht eine relativ sprunghafte Änderung des Kraftverlaufes zum Auslösen der Kupplung 9 abhängig von der Position des Stellarmes 2. Die Ecke 23 kann auch die Begrenzung des Nutzbereiches der Steuerkurve 20' bilden. Durch eine rotationssymmetrische Ausbildung kann die Kraft gegenüberliegender Federn 17 im Gleichlauf verändert werden.

In Figur 8C ist eine modifizierte Steuerkurve 20" dargestellt, die statt einer nockenförmigen Kurve einen geraden Abschnitt 25, einen Eckbereich 24, sowie einen bogenförmigen Verlauf 26 aufweist.

Die Geometrie der Steuerkurve 20, 20' und 20" kann abhängig von dem jeweiligen Einsatzzweck gewählt werden, um die gewünschte Kraft zum Auslösen der Kupplung 9 abhängig von der Position des Stellarmes 2 einstellen zu können.

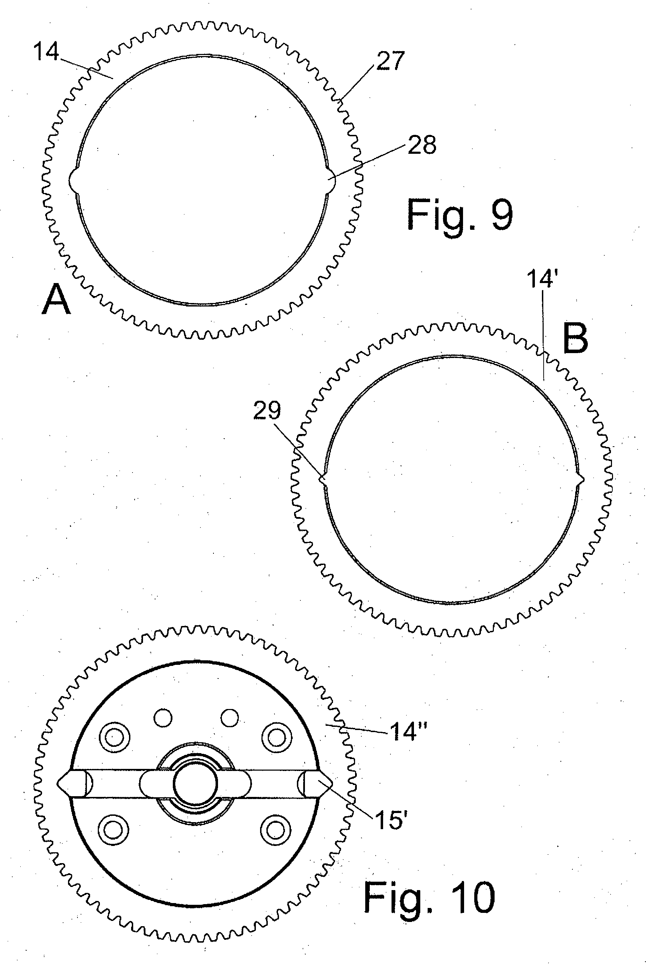

In Figur 9A ist das Antriebsrad 14 im Detail dargestellt, das eine äußere Verzahnung 27 aufweist, die in Eingriff mit einem Zahnrad des Getriebes 8 ist. An einem inneren Umfang des Antriebsrades 14 sind zwei sich gegenüberliegende bogenförmige Aussparungen 28 vorgesehen, die formschlüssig mit dem äußeren Umfang der Rastmittel 15 ausgebildet sein können. Es ist aber auch möglich, die Krümmung der Rastmittel 15 und der Aussparungen 28 abweichend auszugestalten.

Bei dem in Figur 9B gezeigten modifizierten Ausführungsbeispiel eines Antriebsrades 14' sind dreieckförmige Aussparungen 29 vorgesehen, die eine geringere Tiefe aufweisen und daher leichter zu entkoppeln sind.

In Figur 10 ist eine modifizierte Ausführungsform eines Antriebsrades 14" gezeigt, bei dem dreieckförmige Aussparungen am inneren Umfang vorgesehen sind, in die entsprechend winkelförmig geformte Rastmittel 15'' eingefügt sind. Dadurch ergibt sich eine Gleitfläche an jedem Rastmittel, die mit einer Gleitfläche an dem Antriebsrad 14" zusammenwirkt. Im übrigen kann die Kupplung 9 wie bei dem vorangegangenen Ausführungsbeispielen ausgebildet sein.

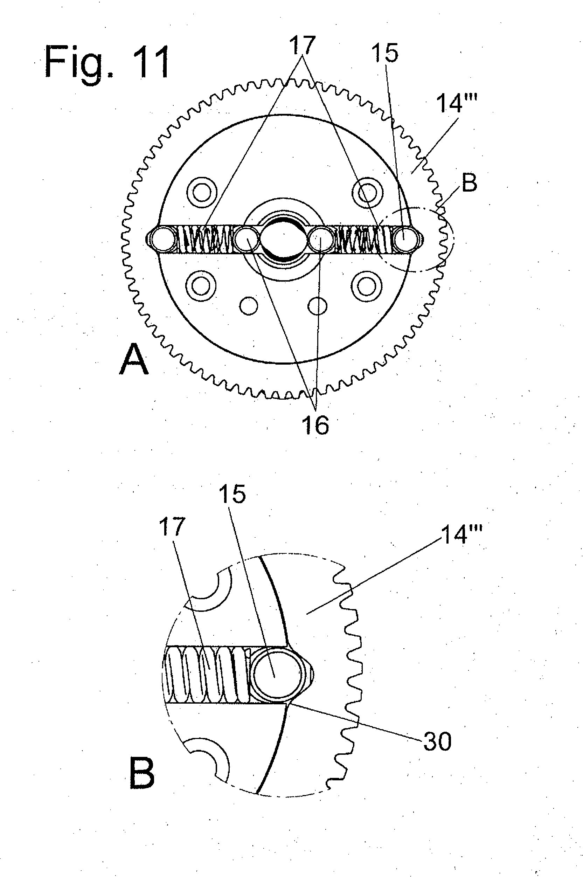

In den Figuren 11A und 11B ist eine weitere Ausführungsform eines Antriebsrades 14''' dargestellt, bei der die als Bolzen ausgebildeten Rastmittel 15 in einer im wesentlichen V-förmigen Aussparung am inneren Umfang des Antriebsrades 14''' durch die Kraft einer Feder 17 gehalten ist. Zwischen der Aussparung und dem inneren Umfang an dem Antriebsrad 14''' ist ein gerundeter Übergang 30 ausgebildet, der beim Auskuppeln des Rastmittels 15 eine gleitende Bewegung zulässt. Dadurch wird eine starke Abnutzung, wie sie bei kantenförmigen Übergängen auftritt, vermieden. Der Radius des Überganges 30 kann z.B. größer als 2mm, vorzugsweise größer als 4mm ausgebildet sein.

In den dargestellten Ausführungsbeispielen sind jeweils zwei Rastmittel 15 über eine Feder 17 vorgespannt. Es ist natürlich auch möglich, nur ein Rastmittel 15 an dem Antriebsrad 14 vorzusehen. Zudem können auch mehr als zwei Rastmittel 15 für den Auslösemechanismus vorgesehen werden.

In dem dargestellten Ausführungsbeispiel ist die Steuerkurve 20 innen an dem Abtriebsrad 11 angeordnet. Es ist natürlich auch möglich, am äußeren Umfang eine entsprechende Steuerkurve vorzusehen und das Antriebsrad an der Innenseite anzutreiben.

Zudem kann der Antrieb 5 auch unmittelbar mit der Kupplung 9 in Eingriff stehen und bei Bedarf kann ein Getriebe zwischen Kupplung 9 und Stellarm 2 vorgesehen sein.

## Patentansprüche

1. Angetriebener Beschlag (1), insbesondere Klappenbeschlag für Möbel, mit mindestens einem Stellarm (2) zum Öffnen und Schließen eines bewegbaren Möbelteils (4), und einem Antrieb (5) zum Bewegen des Stellarmes (2), wobei zwischen Stellarm (2) und Antrieb (5) eine Kupplung (9) des Beschlags (1) angeordnet ist, die eine Bewegung des Stellarmes (2) auch unabhängig von dem Antrieb (5) ermöglicht, wobei die Kraft zum Auskuppeln der Kupplung (9) abhängig von der Position des Stellarmes (2) verstellbar ist, **dadurch gekennzeichnet, dass** die Kupplung (9) als Rastkupplung ausgebildet ist und die Rastmittel (15) sich abhängig von der Position des Stellarmes (2) mit unterschiedlicher Kraft außer Eingriff bringen lassen, und dass eine Steuerkurve (20) mit dem Stellarm (2) gekoppelt ist, um die Kraft zum Auskuppeln der Rastmittel (15) zu verändern.

2. Beschlag nach Anspruch 1, **dadurch gekennzeichnet, dass** die Rastmittel (15) über eine Feder (17) in die eingerastete Position vorgespannt sind,

3. Beschlag nach Anspruch 1 oder 2, **dadurch gekennzeichnet, dass** wobei die Federkraft zum Vorspannen der Rastmittel (15) veränderbar ist

4. Beschlag nach einem der vorhergehenden Ansprüche, **dadurch gekennzeichnet, dass** die Kupplung (9) ein Antriebsrad (14) und ein Abtriebsrad (11) aufweist, zwischen den ein oder mehrere über Federn (17) vorgespannte Rastmittel (15) angeordnet sind.

5. Beschlag nach einem der Ansprüche 1 bis 4, **dadurch gekennzeichnet, dass** die Steuerkurve (20) ortsfest angeordnet ist, und/oder das Abtriebsrad (11) und/oder dem Antriebsrad (14) relativ zu der Steuerkurve (20) bewegbar ist.

6. Beschlag nach einem der Ansprüche 1 bis 5, **dadurch gekennzeichnet, dass** die Steuerkurve (20) nockenförmig ausgebildet ist.

7. Beschlag nach einem der Ansprüche 1 bis 6, **dadurch gekennzeichnet, dass** die Rastmittel (15) bolzenförmig ausgebildet sind, die jeweils teilweise in eine Aussparung (28) an dem Antriebsrad (14) einfügbar sind.

8. Beschlag nach einem der Ansprüche 1 bis 7, **dadurch gekennzeichnet, dass** an der Aussparung benachbart zu dem Rastmittel (15) ein gerundeter Übergang (30) für ein sanfteres Ausrasten der Kupplung angeordnet ist.

## Claims

1. Driven fitting (1), in particular a flat fitting for furniture, having at least one adjusting arm (2) for opening and closing a movable furniture part (4), and a drive (5) for moving the adjusting arm (2), wherein a coupling (9) of the fitting (1) is arranged between the adjusting arm (2) and drive (5), which coupling also allows a movement of the adjusting arm (2) independent of the drive (5), wherein the force for uncoupling the coupling (9) is adjustable depending on the position of the adjusting arm (2), **characterized in that** the coupling (9) is designed as a latching coupling and the latching means (15) can be brought out of engagement with different force depending on the position of the adjusting arm (2), and **in that** a control cam (20) is coupled to the adjusting arm (2) in order to vary the force for uncoupling the latching means (15).

2. Fitting according to Claim 1, **characterized in that** the latching means (15) are preloaded via a spring (17) into the latched-in position.

3. Fitting according to Claim 1 or 2, **characterized in that** the spring force for preloading the latching means (15) is variable.

4. Fitting according to one of the preceding claims, **characterized in that** the coupling (9) has a drive wheel (14) and an output wheel (11) between which there are arranged one or more latching means (15) preloaded via springs (17).

5. Fitting according to one of Claims 1 to 4, **characterized in that** the control cam (20) is arranged in a positionally fixed manner, and/or the output wheel (11) and/or the drive wheel (14) are/is moveable relative to the control cam (20).

6. Fitting according to one of Claims 1 to 5, **characterized in that** the control cam (20) has a boss- shaped design.

7. Fitting according to one of Claims 1 to 6, **characterized in that** the latching means (15) have a bolt-shaped design and can in each case be partially inserted into a recess (28) on the drive wheel (14).

8. Fitting according to one of Claims 1 to 7, **characterized in that** a rounded transition (30) for a smoother unlatching of the coupling is arranged at the recess adjacent to the latching means (15).

## Revendications

1. Ferrure entrainée (1) en particulier ferrure à charnière destinée à un meuble comprenant au moins un bras de réglage (2) pour permettre d'ouvrir et de fermer une partie de meuble mobile (4) et un élément d'entrainement (5) pour permettre de déplacer ce bras de réglage (2), entre le bras de réglage (2) et l'élément d'entrainement (5) étant monté un élément d'accouplement (9) de la ferrure (1) qui permet également un déplacement du bras de réglage (2) indépendamment de l'élément d'entrainement (5), la force permettant de désaccoupler l'élément d'accouplement (9) pouvant être réglé en fonction de la position du bras de réglage (2),
**caractérisée en ce que**
l'élément d'accouplement (9) est réalisé sous la forme d'un accouplement à encliquetage, des moyens d'encliquetage (15) peuvent être dégagés avec une force différente en fonction de la position du bras de réglage (2), et une came de commande (20) est accouplée au bras de réglage (2) pour permettre de modifier la force permettant de désaccoupler les moyens d'encliquetage (15).

2. Ferrure conforme à la revendication 1,
**caractérisée en ce que**
les moyens d'encliquetage (15) sont précontraints par un ressort (17) dans la position encliquetée.

3. Ferrure conforme à la revendication 1 ou 2,
**caractérisée en ce que**
la force élastique permettant de précontraindre les moyens d'encliquetage (15) peut être modifiée.

4. Ferrure conforme à l'une des revendications précédentes,
**caractérisée en ce que**
l'élément d'accouplement (9) comprend une roue d'entrainement (14) et une roue entrainée (11) entre lesquelles est(sont) monté(s) un ou plusieurs moyens d'encliquetage (15) précontraints par des ressorts (17).

5. Ferrure conforme à l'une des revendications 1 à 4,
**caractérisée en ce que**
la came de commande (20) est montée fixe et/ou la roue entrainée (11) et/ou la roue d'entrainement (14) est mobile par rapport à la came de commande (20).

6. Ferrure conforme à l'une des revendications 1 à 5,
**caractérisée en ce que**
la came de commande (20) est réalisée en forme de came.

7. Ferrure conforme à l'une des revendications 1 à 6,
**caractérisée en ce que**
les moyens d'encliquetage (15) sont réalisés en forme de goujons qui peuvent être respectivement partiellement insérés dans un évidement (28) de la roue d'entrainement (14).

8. Ferrure conforme à l'une des revendications 1 à 7,
**caractérisée en ce qu'**
une transition arrondie (30) permettant un dégagement doux de l'élément d'accouplement est prévue sur l'évidement à proximité des moyens d'encliquetage (15).
